Europäisches Patentamt

European Patent Office

Office européen des brevets

(11) Veröffentlichungsnummer: **0 144 875**
**A2**

# (12) EUROPÄISCHE PATENTANMELDUNG

(21) Anmeldenummer: 84114202.9

(22) Anmeldetag: 24.11.84

(51) Int. Cl.⁴: **C 08 F 8/36**
**C 09 K 7/02, E 21 B 33/13**
**C 04 B 24/20**

(30) Priorität: 08.12.83 DE 3344470

(43) Veröffentlichungstag der Anmeldung:
19.06.85 Patentblatt 85/25

(84) Benannte Vertragsstaaten:
AT DE FR GB NL

(71) Anmelder: BAYER AG
Konzernverwaltung RP Patentabteilung
D-5090 Leverkusen 1 Bayerwerk(DE)

(72) Erfinder: Bartl, Herbert, Dr.
Eichendorffweg 10
D-5068 Odenthal(DE)

(72) Erfinder: Oberkirch, Wolfgang, Dr.
Gregor-Mendel-Strasse 8
D-5090 Leverkusen(DE)

(72) Erfinder: Schuster, Klaus
Gerhart-Hauptmann-Strasse 33
D-5090 Leverkusen 3(DE)

(54) Fluid-Loss-Additive für Tiefbohrzement.

(57) Die Erfindung betrifft hochmolekulare Umsetzungsprodukte mit Molekulargewichten von mindestens 20000, von aromatischen Monoaminosulfonsäuren mit Polymerisaten aus Maleinsäureanhydrid oder Maleinsäureestern mit Ethylen, Propylen, Isobutylen oder Styrol zu Amiden bzw. Imiden als Zusätze zu Tiefbohrzementschlämmen.

EP 0 144 875 A2

0144875

BAYER AKTIENGESELLSCHAFT     5090 Leverkusen, Bayerwerk

Zentralbereich
Patente, Marken und Lizenzen   Eck-klu/c

## Fluid-Loss-Additive für Tiefbohrzement

Beim Bohren und Komplettieren von Erdöl- und Gasquellen
werden nach dem Durchbohren der darüber liegenden Erd-
und Gesteinsschichten Futterrohre in das Bohrloch eingeführt und der Ringraum zwischen Bohrlochwand und Verrohrung auszementiert. Dazu wird die Zementschlämme in
der Regel durch die Verrohrung zum Bohrlochgrund und
durch den Ringraum wieder hochgepumpt. Der ausgehärtete
Zement verleiht der Verrohrung den notwendigen Halt,
schützt sie vor Korrosion and verhindert unerwünschte
Flüssigkeitsströme zwischen verschiedenen Formationen.

Für die Bohrlochzementierung werden in der Regel spezielle Tiefbohrzemente eingesetzt, deren Zusammensetzung
sich von der üblicher Bauzemente, wie sie zur Herstellung von Bauteilen als Mörtel verwendet werden, unterscheidet und die in der API-Spezifikation 10 (API =
American Petroleum Institute) in den Klassen A-J festgelegt ist. Zur Verleihung spezieller Eigenschaften
können die Zementschlämme verschiedenartige Zusatzstoffe enthalten. Im Gegensatz zu den in der Bauindustrie

Le A 22 683

verwendeten Mörteln enthalten die Tiefbohrzementschlämme keine grobteiligen Zuschlagstoffe wie Sand oder Kies.

Um den Tiefbohrzemen verbesserte anwendungsspezifische Eigenschaften zu verleihen, sind unterschiedliche Additive gebräuchlich, die z.B. die Fließeigenschaften, das Abbindeverhalten und das Wasserrückhaltevermögen der Zemente beeinflussen.

Bringt man eine reine Zement-Wasser-Aufschlämmung in den Ringraum ein, so besteht die Gefahr, daß zu viel Wasser aus der Zementschlämme in die porösen durchbohrten Formationen abfiltriert. Diese Gefahr wird durch die beim Verpumpen des Zements angewendeten hohen Drucke noch erhöht. Folgen eines vorzeitigen Wasserverlustes der Zementschlämme während des Verpumpens sind z.B. verringerte Fließfähigkeit, die erhöhte Pumpenleistung erfordert und vorzeitiges Abbinden des Zements, das verringerte Festigkeiten nach sich zieht.

Es ist daher üblich, den Zementschlämmen sog. Fluid-Loss-Additive zuzusetzen, die einen vorzeitigen Wasserverlust mit den oben geschilderten, meist kostspieligen Folgen verhindern oder zumindest deutlich herabsetzen.

Gebräuchliche wasserlösliche Polymere für die genannte Anwendung sind z.B. partiell hydrolysierte Polyacrylamide, Polyacrylsäure, Polyimine und Cellulosederivate wie Hydroxyethylcellulose oder Carboxymethylhydroxyethylcellulose (z.B. US-PS 3 937 633, 4 015 991, 4 036 660). Die verfügbaren Fluid-Loss-Additive genügen aber

Le A 22 683

noch nicht allen Anforderungen. Beispielsweise wirken eine Reihe von Produkten in der für ein gutes Wasserrückhaltevermögen benötigten Konzentration gleichzeitig verdickend und beeinträchtigen damit die Verpumpbarkeit. Andere, z.B. Cellulosederivate, weisen nur eine begrenzte Temperaturbeständigkeit auf. Gerade dieser Temperaturbeständigkeit kommt größere Bedeutung zu, da die Zahl der Tiefbohrungen ständig zunimmt und damit die Anforderungen an die Temperaturbeständigkeit der Additive größer werden.

Gegenstand der Erfindung sind demnach hochmolekulare Um- setzungsprodukte von Maleinsäureanhydrid bzw. Malein- säurehalbester-Copolymerisaten mit Ethylen, Propylen, Isobutylen oder Styrol, mit aromatischen Aminosulfonsäuren zu polymeren, substituierten Amiden oder Imiden, sowie deren Verwendung als wasserrückhaltende Zusätze (Fluid-Loss-Additive) in Tiefbohrzementen.

Es wurde gefunden, daß diese Stoffe besonders wirksame Fluid-Loss-Additive sind, wenn die Molgewichte im Falle der Ethylen-, Propylen- und Isobutylen-Copolymerisate bevorzugt $\geq$ 20000 und im Falle der Styrol-Copolymerisate bevorzugt $>$ 100000 betragen.

Es wurde weiterhin gefunden, daß die erfindungsgemäßen Stoffe besonders vorteilhaft auch bei erhöhten Temperaturen im Bereich oberhalb von 90°C bis ca. 130° und gegebenenfalls darüber eingesetzt werden können, ohne daß es zu einem drastischen Leistungsabfall kommt wie etwa bei den Cellulosederivaten.

Le A 22 683

Ein weiterer Vorteil der neuen Fluid-Loss-Additive ist ihr günstiges rheologisches Verhalten in der Zementschlämme. Im Gegensatz zu anderen als Fluid-Loss-Additiv verwendeten synthetischen Polymeren wirken die erfindungsgemäßen Stoffe nicht verdickend auf die Zementschlämme.

Bei der Bohrlochzementierung ist es häufig erforderlich, der Zementzubereitung Abbindeverzögerer zuzusetzen, um ein zu schnelles Abbinden beim Verpumpen in größeren Tiefen, in denen die Temperatur 90°C leicht überschreiten kann, zu vermeiden. Es ist ein weiterer Vorteil der erfindungsgemäßen Stoffe, daß sie selbst eine verzögernde Wirkung aufweisen, die auch bei hohen Temperaturen gut erhalten bleibt, so daß bei hohen Einsatztemperaturen sowohl die wasserrückhaltende als auch die verzögernde Wirkung ausgenutzt werden können.

Die Herstellung der Maleinsäureanhydrid-bzw. Maleinsäurehalbester-Copolymerisate kann nach bekannten Verfahren erfolgen. Z.B. durch Copolymerisation des Maleinsäureanhydrids (MA) oder der Maleinsäurehalbester in Lösungsmitteln oder durch nachträgliche Veresterung der MA-Copolymerisate zu Halbestern oder Diestern. Als Ausgangssubstanzen werden vorzugsweise Copolymerisate aus Ethylen oder Styrol mit Maleinsäureanhydrid eingesetzt. Die Umsetzung der Anhydrid- bzw. Ester-Copolymeren mit Aminosulfonsäuren bzw. deren Salzen kann in organischen Lösungsmitteln, oder in wässrigem Milieu bei Temperaturen, bevorzugt von 20 bis 100°C erfolgen.

Le A 22 683

- 5 -

Höhere Temperaturen bis 200°C werden bevorzugt, wenn man vorwiegend Imidstrukturen erhalten will.

Als aromatische Aminosulfonsäuren sind z.B. die Sulfanilsäure, Aminotoluolsulfonsäure oder Monoaminonaphthalin-Mono- oder Disulfosäuren geeignet.

Von den möglichen Copolymeren des Maleinsäureanhydrids bzw. der Halbester mit anderen Vinylverbindungen, wie Vinylacetat, Styrol, Isobutylen, Vinylether, Ethylen oder Propylen werden vorzugsweise die Umsetzungsprodukte der Copolymeren mit Ethylen, Propylen, Isobutylen und Styrol verwendet. Die Molekulargewichte der einzusetzenden Anhydrid- bzw. Halbester-Copolymeren sind mindestens 20000, im Falle des Styrol-Maleinsäureanhydrid-Copolymeren bevorzugt mehr als 100000.

Es hat sich als günstig erwiesen, wenn von den Anhydrid- bzw. Halbester-Gruppen bis zu 90 % mit aromatischen Aminosulfosäuren umgesetzt werden. Vorzugsweise sind die Umsetzungsprodukte wasserlöslich.

Die erfindungsgemäß hergestellten Polymerisate können weiterhin bis zu 50 % Säure-Gruppen (Carboxylgruppen) enthalten. Diese liegen vorzugsweise als Salze mit Kationen wie Alkali- oder Ammoniumionen bzw. Aminen vor.

Die erfindungsgemäßen Polymeren können entweder in fester Form dem Tiefbohrzement ("dry blend") zugesetzt werden oder als wässrige Lösung vor Ort dem Anmischwasser bei

Le A 22 683

der Zubereitung der Zementschlämmen zugesetzt werden. Für die zweite Variante eignen sich besonders die Ethylen-Copolymerisate, die als 30-40 %ige wässrige Lösungen nocht gut verpumpbar sind.

Die Fluid-Loss-Additive sollen in möglichst niedrigen, wirtschaftlich vertretbaren Zusatzmengen wirksam sein. Die erfindungsgemäßen Additive können im Bereich von 0.1 bis 3 % eingesetzt werden. Bevorzugt sind Einsatzmengen von 0.2 bis 2.0 %, besonders bevorzugt 0.5 bis 1.0 %.

Die Beurteilung des Fluid-Loss reduzierenden Verhaltens erfolgt gemäß API-Spezifikation 10 (1. Auflage, Jan. 1982, Appendix F, Seiten 72-74).

Die Zementschlämme besteht aus 1000 g Tiefbohrzement API-Klasse G, 440 g Wasser und 1.0 bis 30 g Fluid-Loss-Additiv, dessen Menge auf den trockenen Zement bezogen ist. Additiv in fester Form wird unter den trockenen Zement gemengt. Bei Einsatz als wässrige Lösung wird es dem Anmischwasser zugesetzt. Die Komponenten werden in einem Mischaggregat (Waring Blender) 15 sec bei niedriger, dann 35 sec bei hoher Geschwindigkeit gemischt. Dann wird die resultierende Schlämme 20 min in einem Halliburton-Konsistometer bei atmosphärischem Druck und der späteren Prüftemperatur gemischt und anschließend in eine auf Prüftemperatur gebrachte Hochdruckfilterzelle (Fabrikat Baroid) übergeführt. Als Filter dient ein Sieb No. 325 US-Standard-Sieb-Serie.

Le A 22 683

Während der Prüfung werden 1000 psi (~70 bar) $N_2$-Druck aufrechterhalten. Das während 30 min austretende Filtrat wird aufgefangen, bei Prüftemperaturen > 100°C in einem Druckgefäß. Das Ergebnis wird in ml/30 min Filtrat angegeben.

Bei 90°/1000 psi werden Werte von 100 ml/30 min, bei Temperaturen in der Größenordnung von 120-140 werden 150 ml/30 min als wünschenswert angesehen und von den erfindungsgemäßen Additiven erreicht.

Die Erfindung wird durch die nachfolgenden Beispiele näher erläutert, in denen die Herstellung der erfindungsgemäßen Additive sowie das Wasserrückhaltevermögen repräsentativer Vertreter unter verschiedenen Bedingungen beschrieben wird.

Le A 22 683

Beispiel 1

In einem 3 l-Rührgefäß mit Innenthermometer werden 195 Gew.-Teile Sulfanilsäure-Na-Salz bei 90 °C unter Rühren in 2000 Gew.-Teilen Wasser gelöst. Zu der klaren Lösung gibt man innerhalb von 15 Minuten portionsweise 126 Gew.-Teile eines alternierenden Copolymerisates aus Ethylen und Maleinsäureanhydrid mit einem mittleren Molgewicht von 100 000.

Nach beendeter Zugabe rührt man weitere 8 Stunden bei 90°C. Man erhält eine homogene Lösung mit einem Feststoffgehalt von 13,6 %. Ein Teil der Lösung wird 48 Stunden gegen Wasser dialysiert und die im Dialyseschlauch verbleibende Lösung bis zur Trockene eingeengt. Die Schwefelanalyse ergibt einen Wert von 6,4 %.

Beispiel 2

Gemäß Beispiel 1 werden 126 Gew.-Teile eines alternierenden Copolymerisates aus Ethylen und Maleinsäureanhydrid mit einem mittleren Molgewicht von 25 000 mit Sulfanilsäure-Na-Salz umgesetzt. Man erhält eine homogene Lösung mit einem Feststoffgehalt von 13,7 %. Das Produkt hatte nach 48stündiger Dialyse einen Schwefelgehalt von 6,5 %.

Beispiel 3

Gemäß Beispiel 1 werden 126 Gew.-Teile eines alternierenden Copolymerisates aus Ethylen und Maleinsäurean-

Le A 22 683

hydrid mit einem mittleren Molgewicht von 8000 mit Sulfanilsäure-Na-Salz umgesetzt. Man erhält eine homogene Lösung mit einem Feststoffgehalt von 13,4 %. Das Produkt hatte nach 48stündiger Dialyse einen Schwefelgehalt von 6,8 %.

Beispiel 4

In einem 2 l-Rührkolben mit Innenthermometer und Tropftrichter werden 126 Gew.-Teile eines alternierenden Copolymerisates aus Ethylen und Maleinsäureanhydrid mit einem mittleren Molgewicht von 100000 in 800 Gew.-Teilen Aceton gelöst. Separat wird eine konzentrierte wässrige Lösung von Sulfanilsäure-K-Salz bereitet, indem man zu einer Suspension von 173 Gew.-Teilen Sulfanilsäure in 300 Gew.-Teilen Wasser bei 50°C unter Rühren portionsweise 69 Gew.-Teile wasserfreies Kaliumcarbonat einträgt. Die entstandene 50°C warme Lösung wird innerhalb von 60 Min. zu der ebenfalls auf 50°C erhitzten Lösung des Ethylen-Maleinsäureanhydridcopolymeren in Aceton getropft. Es wird 2 Std. bei 50°C nachgerührt. Der klumpige leicht schmierige Ausfall wird nach Abziehen des überstehenden Lösungsmittels 30 Min. mit 1000 Gew.-Teilen Aceton bei 25°C ausgerührt und bei 60°C getrocknet. Nach Mahlung in einer Schlagmühle und nochmaliger Trocknung bei 60°C erhält man 305 Gew.-Teile eines körnigen Produktes. Nach 48-stündiger Dialyse in Wasser hatte das Produkt einen Schwefelgehalt von 8,1 %.

Le A 22 683

Beispiel 5

Gemäß Beispiel 4 werden 202 Gew.-Teile eines alternierenden Copolymerisates aus Styrol und Maleinsäureanhydrid
mit einem mittleren Molgewicht von 70000, gelöst in 1600
Gew.-Teilen Aceton umgesetzt. Nach Trocknung und Mahlung
erhält man 382 Gew.-Teile Umsetzungsprodukt.

Beispiel 6

Es werden 202 Gew.-Teile eines alternierenden Copolymerisates aus Styrol und Maleinsäureanhydrid mit einem mittleren Molgewicht von 500000 in einem Lösungsmittelgemisch
aus 1800 Gew.-Teilen Acetonitril und 200 Gew.-Teilen
Aceton unter Anquellung suspendiert und sodann wird gemäß Beispiel 4 weiter verfahren. Nach dem Ausrühren mit
1000 Gew.-Teilen Aceton erhält man ein feines Pulver.
Nach dem Trocknen wurden 390 Gew.-Teile des Umsetzungsproduktes erhalten.

Beispiel 7

Gemäß Beispiel 6 werden 184 Gew.-Teile eines alternierenden Copolymerisates aus Vinylacetat und Maleinsäureanhydrid mit einem mittleren Molgewicht von 80000 umgesetzt. Im Gegensatz zum Beispiel 6 ist hier das Polymerisat im Lösungsmittelgemisch aus Acetonitril und Aceton gelöst. Es werden 365 Gew.-Teile an trockenem Umsetzungprodukt erhalten.

Le A 22 683

## Beispiel 8

Nach der Verfahrensweise von Beispiel 4 werden 126 Gew.-Teile eines alternierenden Copolymerisates aus Ethylen und Maleinsäureanhydrid mit einem mittleren Molgewicht von 100000 in 800 Gew.-Teilen Aceton gelöst, und sodann mit 369 Gew.-Teilen einer 41 Gew.%igen Lösungen von Taurin-Na in Wasser umgesetzt. Nach dem Trocknen und Mahlen werden 265 Gew.-Teile des Umsetzungsproduktes erhalten.

## Beispiel 9

In einem 6 ltr. Autoklav mit Ankerrührer werden 3150 Gew.-Teile destilliertes Wasser und 692 Gew.-Teile Sulfanilsäure vorgelegt und unter Rühren (n = 100/U/Min) auf 70°C erhitzt. Innerhalb von 30 Min. werden portionsweise 277 Gew.-Teile wasserfreies Kaliumcarbonat eingetragen. Nach 10 Min. bei 70°C und einer Drehzahl von 100 U/Min. gerührt wurde, trägt man innerhalb von 30 Min. unter weiterem Rühren 504 Gew.Teilen eines alternierenden Copolymerisates aus Ethylen und Maleinsäureanhydrid mit einem mittleren Molgewicht von 100000 ein. Hiernach wird der Autoklav verschlossen, evakuiert und zur Entfernung von Sauerstoffresten 3 mal mit 2 bar Stickstoff gespült. Unter Rühren erhitzt man 3 Stunden auf 90°C und 2 Stunden auf 180°C. Nach Abkühlung erhält man 4420 Gew.-Teile einer Lösung mit einem Feststoffanteil von 28,5 Gew.-%.

Le A 22 683

Beispiel 10

Das Wasserrückhaltevermögen bei 90°/1000 psi wird nach
API-Spec 10, (1. Aufl. Jan. 1982, Appendix F, S 72-74)
bestimmt. Die Wirksamkeit von Produkten aus den Beispielen 1-9 ergibt sich aus der nachfolgenden tabellarischen Übersicht.

| Beispiel Nr. | Einsatzmenge (Gew.-% bez. auf Zement) | Fluid-Loss-Rate (ml/30 Min) |
|---|---|---|
| 1 | 1.5 | 101 |
| 2 | 1.5 | 172 |
| 3 | 1.5 | 265 |
| 4 | 1.5 | 82 |
| 5 | 2.0 | 32 |
| 6 | 0.5 | 76 |
| 7 | 1.5 | >1000 |
| 8 | 1.0 | >1000 |
| 9 | 1.5 | 78 |

Beispiel 11

Bei 120°C/1000 psi werden nach der ansonsten gleichen
Vorgehensweise wie in Beispiel 10 folgende Fluid-Loss-
Raten ermittelt:

| Beispiel Nr. | Einsatzmenge (Gew.-% bez. auf Zement) | Fluid-Loss-Rate /ml/30 Min) |
|---|---|---|
| 5 | 2.0 | 34 |
| 6 | 0.5 | 77 |

Le A 22 683

## Beispiel 12

Dieses Beispiel veranschaulicht die abbindeverzögernde Wirkung der erfindungsgemäßen Produkte. Gemessen wird die Versteifungszeit einer Zementschlämme aus 100 Teilen Tiefbohrzement Klasse G gemäß API-Spezifikation 10 und 44 Teilen Wasser unter Zusatz von unterschiedlichen Mengen der erfindungsgemäßen Stoffe. Die Prüfung erfolgt in einem Hochdruck-Hochtemperatur-Konsistometer der Fa. Halliburton gemäß API-Spec. 10, (Section 8, S. 22-31) und unter den in der gleichen Spezifikation in Appendix E, S. 58 unter Schedule 11 g/4 beschriebenen Druck- und Temperaturbedingungen (126°C, 22000 psi). Die Ergebnisse sind nachfolgend tabellarisch dargestellt:

| Beispiel Nr. | Einsatzmenge (Gew.-% bez. auf Zement) | Versteifungszeit (Min) |
|---|---|---|
| 1 | 1.2 | 150 |
| 5 | 0.5 | 140 |
| 6 | 0.5 | 200 |
| Nullprobe | 0 | 50 |

Le A 22 683

0144875

**Patentansprüche**

1) Hochmolekulare Umsetzungsprodukte mit Molekulargewichten von mindestens 20 000, von aromatischen
Monoaminosulfonsäuren mit Polymerisaten aus Maleinsäureanhydrid oder Maleinsäureestern mit Ethylen,
Propylen, Isobutylen oder Styrol zu Amiden bzw.
Imiden als Zusätze zu Tiefbohrzementschlämmen.

2) Verwendung von Fluid-Loss-Additiven gemäß Anspruch
1, dadurch gekennzeichnet, daß diese aus Umsetzungsprodukten von Ethylen-Maleinsäureanhydridcopolymeren
mit aromatischen monoamino-Sulfonsäuren, hergestellt werden und Molgewichte von 20 000 bis
500 000 aufweisen.

3) Hochmolekulare Umsetzungsprodukte mit Molekulargewichten von 100 000 vorzugsweise 500 000 bis
5 000 000, hergestellt durch Umsetzung von Styrol-
Maleinsäureanhydrid bzw. Maleinsäurehalbestercopolymeren mit aromatischen monoamino-Sulfonsäuren,
als Fluid-Loss-Additivefür Tiefbohrzementschlämme.

4) Zementzubereitung zum Zementieren von Hohlräumen,
dadurch gekennzeichnet, daß der Zubereitung zur
Verminderung des vorzeitigen Wasserverlustes 0,05
bis 5,0 % von Copolymeren auf Basis von Maleinsäureanhydrid, die über Amid- oder Imidstoffatome Sulfonsäuregruppen tragende Arylgruppen enthalten, zugesetzt werden.

<u>Le A 22 683</u>